# EUROPÄISCHE PATENTSCHRIFT

(11) **EP 4 628 833 B1**
(45) Veröffentlichungstag und Bekanntmachung des Hinweises auf die Patenterteilung: **03.06.2026**
(21) Anmeldenummer: 24167987.7
(22) Anmeldetag: 02.04.2024
(51) Int. Cl.: G01B 7/02, G01B 11/02, G01B 5/00

(54) **LÄNGENBESTIMMUNG EINES TRAGWERKS EINES BAUWERKS MITTELS KRAGARMS**
LENGTH DETERMINATION OF A STRUCTURE'S FRAMEWORK USING CANTILEVERS
DÉTERMINATION DE LA LONGUEUR D'UNE STRUCTURE PORTEUSE D'UN BÂTIMENT AU MOYEN DE CROUSTILLES

(43) Veröffentlichungstag der Anmeldung: 08.10.2025
(73) Patentinhaber: Lucks, Christoph, 22303 Hamburg (DE)
(72) Erfinder: Lucks, Christoph, 22303 Hamburg (DE); Bruhnsen, Paul, 22525 Hamburg (DE)
(74) Vertreter: Raffay & Fleck

(56) Entgegenhaltungen:
- ROMAN GEIER ET AL: "�BB Steyrtalbr�cke - Belastungsprobe und Langzeitmessungen", BETON- UND STAHLBETONBAU, JOHN WILEY, HOBOKEN, USA, vol. 111, no. 8, 6 August 2016 (2016-08-06), pages 505 - 515, XP071032124, ISSN: 0005-9900, DOI: 10.1002/BEST.201600025
- ROMAN GEIER ET AL: "Monitoring der Seitenhafenbr�cke in Wien", BETON- UND STAHLBETONBAU, JOHN WILEY, HOBOKEN, USA, vol. 109, no. 7, 1 July 2014 (2014-07-01), pages 486 - 495, XP071133056, ISSN: 0005-9900, DOI: 10.1002/BEST.201400023

## Beschreibung

Die Erfindung betrifft ein Verfahren zur Bestimmung einer Länge eines Abschnitts eines Tragwerks eines Bauwerks, insbesondere eines Betonbauwerks oder Stahlbauwerks, die Analyse bzw. Überwachung desselbigen sowie eine Messanordnung und ein Tragwerk für ein Bauwerk, insbesondere eines Betonbauwerk oder Stahlbauwerk, mit einer Messanordnung zur Bestimmung einer Länge eins solchen Abschnitts.

Tragwerke werden bei verschiedenen Bauwerken eingesetzt, um auf den Bauwerken einwirkende Lasten aufzunehmen und bspw. in den Boden, den Baugrund abzuleiten. Tragwerke dienen also insbesondere bei Bauwerken, mit denen ein Raum/Bereich ohne weitere Abstützungen zum Baugrund überbrückt werden soll, zur Stabilisierung dieses Teils des Bauwerks. Dabei sind verschiedene Arten von Tragwerken bekannt, wobei ein Tragwerk in der Regel als Teil des Bauwerks betrachtet werden kann. Das Tragwerk besteht dabei in der Regel aus einer Gründung, die die aufgenommene Last in den Baugrund ableitet, und weiteren Bestandteilen. Ein Tragwerk, auch im Sinne der hier vorliegenden Erfindung, kann dabei beispielsweise ein Stabtragwerk oder ein Flächentragwerk, insbesondere ein Massivtragwerk, sein.

Ein Bauwerk, auch im Sinne der hier vorliegenden Erfindung, kann dabei insbesondere ein Betonbauwerk, das zum großen Teil aus Beton besteht. In bestimmten Situationen wird zur Bewehrung des Bauwerks dem Beton Stahl hinzugefügt und vom Beton eingebettet. Insbesondere dann, wenn diese Bauwerke größere Bereiche ohne zusätzlichen Halt überspannen müssen und hierfür keine externe Stütze vorgesehen ist, wird dieser Stahl mit einer Zugkraft vorgespannt, es wird also ein Spannbeton verwendet, weshalb derartige Bauwerke auch Spannbetonbauwerke genannt werden. Es ist auch möglich, dass Teile eines Bauwerks aus Beton, insbesondere Spannbeton, und andere Teile aus anderem Material hergestellt werden, also das Bauwerk teils ein Betonbauwerk, beispielsweise ein Spannbetonbauwerk, teils auch ein anderes Bauwerk, bspw. ein Stahlbauwerk, sein kann.

Ein Bauwerk, auch im Sinne der hier vorliegenden Erfindung, kann dabei insbesondere ein Stahlbauwerk, das zum großen Teil aus Stahl besteht. Es ist auch möglich, dass Teile eines Bauwerks aus Stahl und andere Teile aus anderem Material hergestellt werden, also das Bauwerk teils ein Stahlbauwerk teils auch ein anderes Bauwerk, bspw. ein Betonbauwerk, sein kann.

Stahlbauwerke oder Betonbauwerke, insbesondere Spannbetonbauwerke, werden insbesondere bei Brücken oder bei anderen Bauwerken eingesetzt, die beispielsweise einen Bereich überbrücken bzw. überspannen, der nicht von anderen Mitteln gestützt wird, wie bspw. Ebenen und Rampen in Parkhäusern.

Hierfür werden in aller Regel Tragwerke benötigt. Derartige Tragwerke können üblicherweise grundsätzlich aus Holz, Beton oder Stahl hergestellt werden. Im Sinn der folgenden Erfindung werden jedoch im Grunde lediglich Tragwerke aus Beton bzw. Stahl betrachtet.

Die Bauwerke und deren Tragwerke sind dabei den jeweils relevanten normalen Bedingungen ausgesetzt, wie den in dem jeweiligen Einsatzgebiet des Bauwerks üblichen Umweltbedingungen sowie anderen für die Funktion des Bauwerks übliche Bedingungen. Derartige Umweltbedingungen sind beispielsweise die Temperatur, Feuchtigkeit. Die anderen Bedingungen sind beispielsweise Belastungsbedingungen, wie die zulässigen Gewichtsbelastungen der einzelnen Teile des Bauwerks. Aufgrund dieser Bedingungen unterliegen diese Bauwerke und deren Tragwerke neben einem normalen Verschleiß auch zusätzlichen Verschleißerscheinungen bzw. Veränderungen, die teils lediglich temporär zu Veränderungen und temporären Verschleißerscheinungen führen. Beispielsweise verändert sich aufgrund von Temperaturunterschieden oder Unterschieden in der Belastung im Laufe der Zeit die Länge eines Abschnitts sowohl kurzzeitig als auch langzeitlich, da sich Teile des Bauwerks oder aber Teiles des Tragwerks temporär aufgrund einer Belastung, die auf diese Teile des Bauwerks oder des Tragwerks einwirken, dehnen. Zudem kann auch das in dem Tragwerk verwendete Material ermüden. Insbesondere, da die Tragwerke die auf dem Bauwerk einwirkenden Lasten aufnehmen und ableiten sollen, ist der Zustand des Tragwerks von besonderer Bedeutung. Da diese Bauwerke bei einem Zusammenbrechen des Tragwerks zu einem enormen Schaden führen können, ist es erstrebenswert, den Zustand eines solchen Tragwerks zu überwachen oder zumindest zu bestimmten Zeitpunkten zu analysieren, um möglichen Verschleiß identifizieren zu können.

Ein Maß zur Verwendung in der Analyse bzw. Überwachung ist die Bestimmung einer Länge bestimmter Abschnitte eines Tragwerks, insbesondere besonders kritischer oder aussagekräftiger Abschnitte. Dabei kann als probater Analyseparameter bzw. Überwachungsparamete sowohl eine Änderung der Länge im Laufe der Zeit aber auch eine Veränderung der, insbesondere kurzzeitlichen, Längenänderungen im Laufe der Zeit verwendet werden.

So ist bekannt, dass bei einer Überfahrt über ein Bauwerk, also einer Belastung einzelner Abschnitte des Bauwerks, Teile des Tragwerks gedehnt werden können, beispielsweise um wenige Mikrometer oder gar Nanometer pro Meter der Länge des Abschnitts. Je nach Alterung des Abschnitts ändert sich diese Dehnung bei gleicher Belastung.

Hierbei problematisch ist, dass derartige Änderungen in der Regel eher langsam und kleinteilig erfolgen, gleichwohl auch das Erkennen derart kleiner Änderungen von Vorteil sein können, da somit derartige Tragwerke und somit letzten Endes die Bauwerke engmaschiger analysiert bzw. überwacht werden können, wodurch der Zustand des Tragwerks und insbesondere auch des Bauwerks besser beobachtet und gegebenenfalls besser reagiert werden kann. So kann bspw. die Verwendungsdauer einer Brücke noch verlängert werden, wenn man durch die engmaschige Überwachung bzw. Analyse des Tragwerks näher an den Grenzwert des Tragwerks heranrücken kann. In der Regel sind die kritischen Abschnitte derartiger Tragwerke im Bereich von wenigen Zentimeter bis einigen Metern.

Der Artikel Geier, R., Menge, M., Mack, T. and Petraschek, T. (2016), ÖBB Steyrtalbrücke - Belastungsprobe und Langzeitmessungen. Beton- und Stahlbetonbau, 111: 505-515 offenbart das Bestimmen einer Längenänderung zwischen zwei Punkten an einem Tragwerk eines Bauwerks.

Es wird also ein Verfahren bzw. eine Messanordnung benötigt, mittels dem bzw. der die Länge bzw. eine Änderung der Länge eines Teils eines Tragwerks präzise, und bestenfalls auch noch genau, bestimmt werden kann. Dabei ist es möglich, den zu analysierenden bzw. zu überwachenden Teil des Tragwerks, also den Abschnitt und dessen Längserstreckung, zu verlängern, da dann die aufsummierten Änderungen der Länge zu einem größeren Wert der Länge führt. Jedoch basiert die Bestimmung einer Länge üblicherweise auf einer Messung, die mit einem Messfehler behaftet ist. Dieser Messfehler ist nun bei größeren Messwerten größer, da der Messfehler üblicherweise relativ und abhängig vom Absolutwert ist.

Die durch die Erfindung zu lösende Aufgabe besteht somit darin, die Analyse bzw. die Überwachung bzw. allgemein die Bestimmung einer Länge eines zu analysierenden bzw. zu überwachenden Abschnitts eines Tragwerks eines Bauwerks zu verbessern.

Diese Aufgabe wird gelöst durch ein Verfahren zur Bestimmung einer Länge eines Abschnitts eines Tragwerkes eines Bauwerks wie nachfolgend beschrieben, insbesondere nach Anspruch 1, durch ein Verfahren zur Analyse eines Abschnitts eines Tragwerkes eines Bauwerks wie nachfolgend beschrieben, insbesondere nach Anspruch 5, ein Verfahren zur Überwachung eines Tragwerkes eines Bauwerks wie nachfolgend beschrieben, insbesondere nach Anspruch 6, einer Messanordnung zur Bestimmung einer Länge eines Abschnitts eines Tragwerkes eines Bauwerks wie nachfolgend beschrieben, insbesondere nach Anspruch 7, sowie ein Tragwerk für ein Bauwerk mit darauf angeordneter Messanordnung wie nachfolgend beschrieben, insbesondere nach Anspruch 15. Weitere Lösungen insbesondere vorteilhafte Ausbildungen der vorgenannten Lösungen sind in den weiteren Ansprüchen sowie in der folgenden Beschreibung dargestellt.

Die Erfindung betrifft demnach ein Tragwerk eines Bauwerks bzw. ist für ein Tragwerk eines Bauwerks eingerichtet und konfiguriert bzw. wird hierfür verwendet. Wie eingangs erwähnt ist das Tragwerk Teil eines Bauwerks, also Teil des Gesamtsystems eines komplexeren Bauwerks. Ein solches Bauwerk kann insbesondere eine Brücke oder ein Parkhaus sein. Das Tragwerk kann insbesondere zur Stabilisierung des Bauwerks und/oder zur Aufnahme und Ableitung von auf Teilen des Bauwerks wirkenden Lasten eingerichtet und/oder verwendet werden. Insbesondere handelt es sich bei dem Tragwerk um ein Tragwerk eines Bauwerks, das ein Teilstück aufweist, das nicht durch Stützen gegenüber dem Baugrund abgestützt wird und das diesen nicht gestützten Bereich überbrücken soll.

Die Aufgabe wird demnach durch ein Bestimmungsverfahren gelöst, in welchem eine Länge bestimmt wird. Insbesondere wird bei der Bestimmung der Länge eine Änderung der Länge, bspw. als eine Änderung zu einem Referenzwert oder einem zuvor gemessenen Wert, bestimmt.

Erfindungsgemäß erstreckt sich der Abschnitt, der bzw. dessen Länge bspw. analysiert bzw. überwacht werden soll, über einen Teil eines Tragwerks eines Bauwerks, insbesondere eine Betonbauwerks, insbesondere Spannbetonbauwerks, und/oder Stahlbauwerks. Dieser Teil des Tragwerks erstreckt sich dabei von einer ersten Festlegevorrichtung hin zu einer zweiten Festlegevorrichtung. Die erste Festlegevorrichtung ist an dem Tragwerk festgelegt. Vorteilhafterweise kann die erste Festlegevorrichtung an dem Tragwerk ortsfest festgelegt sein. Die zweite Festlegevorrichtung ist erfindungsgemäß an dem Tragwerk festgelegt. Vorteilhafterweise kann die zweite Festlegevorrichtung an dem Tragwerk ortsfest festgelegt sein. Vorteilhafterweise ist die erste Festlegevorrichtung um die Länge des Abschnitts von der zweiten Festlegevorrichtung beabstandet.

Erfindungsgemäß wird in einem Verfahrensschritt ein Abstand, insbesondere eine Änderung eines Abstandes, zwischen einem freien Ende eines Kragarms und einem Messelement gemessen. Die Messung kann dabei vorteilhafterweise induktiv, kapazitiv und/oder optisch erfolgen. Erfindungsgemäß ist der Kragarm an der ersten Festlegevorrichtung, insbesondere ortsfest, angeordnet. Vorteilhafterweise kann die erste Festlegevorrichtung somit den Kragarm an dem Tragwerk festlegen. Vorteilhafterweise wird der Kragarm mittels der ersten Festlegevorrichtung an dem Tragwerk festlegt. Erfindungsgemäß überspannt der Kragarm den Abschnitt in Richtung zur zweiten Festlegevorrichtung zumindest teilweise. Vorteilhafterweise ist der Kragarm mittels der ersten Festlegevorrichtung ortsfest mit dem Tragwerk verbunden und erstreckt sich von diesem Bereich aus in Richtung der zweiten Festlegevorrichtung und überspannt dabei und somit den Abschnitt zumindest teilweise. Erfindungsgemäß ist der Kragarm zwischen der ersten Festlegevorrichtung und seinem freien Ende mittels mindestens eines Lagers stützend an dem Tragwerk oder Bauwerk gelagert.

Vorteilhafterweise kann durch das Lager der Kragarm stabilisiert werden. Vorteilhafterweise kann es sich bei dem Lager um ein Klemm- und/oder Gleitlager handeln. Vorteilhafterweise kann wegen des Lagers der Kragarm gegenüber dem Lager in Längsrichtung und/oder der Querrichtung des Kragarms frei beweglich sein. Vorteilhafterweise ist das Lager in der Nähe des freien Endes angeordnet, insbesondere mit einem Abstand zum freien Ende von weniger als 25% der Längserstreckung des Abschnitts und/oder des Kragarms.

Durch den Einsatz des Lagers und dessen, insbesondere lediglich stützende, Lagerung des Kragarms, insbesondere eine Lagerung in der Nähe des freien Endes des Kragarms, wird die Position des freien Endes stabilisiert, sodass der Abstand zwischen dem freien Ende und dem Messelement präziser gemessen werden kann. Aufgrund der, insbesondere lediglich stützenden, Lagerung ist der Abstand somit nicht an dem Festlegepunkt des Lagers gekoppelt, sodass nicht lediglich Einflüsse zwischen dem Lager und der zweiten Festlegevorrichtung gemessen werden können, sondern vielmehr Einflüsse und Änderungen zwischen der ersten und dem zweiten Festlegevorrichtung gemessen werden können.

Erfindungsgemäß wird in einem anderen Verfahrensschritt auf Basis des gemessenen Abstands, insbesondere auf Basis mehrerer über die Zeit gemessenen Abstände, zwischen dem freien Ende und dem Messelement die Länge des Abschnitts bestimmt. Vorteilhafterweise kann auf Basis mehrerer über die Zeit gemessenen Abstände, insbesondere auf Basis von Änderungen zwischen den über die Zeit gemessenen Abständen, zwischen dem freien Ende und dem Messelement eine über die Zeit erfolgte Änderung der Länge, also die Längenänderung, bestimmt werden.

Vorteilhafterweise kann das erfindungsgemäße Verfahren die Bereitstellung des Kragarms als einen an die thermische Ausdehnung des Tragwerks angepassten Kragarm umfassen. Vorteilhafterweise erfolgt die Anpassung zumindest an dem Teil des Tragwerks, der entlang des Abschnitts vorliegt. Vorteilhafterweise erfolgt die Anpassung durch Anpassung bzw. Auswahl der Längsausdehnung des Kragarms, insbesondere Auswahl eines Längsausdehnungskoeefizenten eines Materials des Kragarms. Vorteilhafterweise kann die Anpassung durch eine Bereitstellung eines Kragarms erfolgen, der aus Glas- und/oder Kohlefaserverbundwerkstoff gebildet ist. Vorteilhafterweise kann die Anpassung durch eine Bereitstellung eines Kragarms erfolgen, der eine angepasste und insbesondere wie folgt definierte, Faserrichtungsverteilung aufweist. Vorteilhafterweise kann die thermische Ausdehnung der Glas- und/oder Kohlefasern des Glas- und/oder Kohlefaserverbundwerkstoffs in deren Faserlängsrichtung eine Wärmeausdehnung, insbesondere einen Längenausdehnungskoeffizienten, von mindestens - 30*10⁻⁶ K⁻¹ bis maximal + 60*10⁻⁶ K⁻¹, insbesondere mindestens - 10*10⁻⁶ K⁻¹ bis maximal + 10*10⁻⁶ K⁻¹, insbesondere mindestens - 1*10⁻⁶ K⁻¹ bis maximal 0*10⁻⁶ K⁻¹, insbesondere etwa -0,1*10⁻⁶ K⁻¹, und zu deren Faserquerrichtung eine Wärmeausdehnung, insbesondere einen Längenausdehnungskoeffizienten, von mindestens - 30*10⁻⁶ K⁻¹ bis maximal + 60*10⁻⁶ K⁻¹, insbesondere mindestens 0*10⁻⁶ K⁻¹ bis maximal + 40*10⁻⁶ K⁻¹, insbesondere mindestens 10*10⁻⁶ K⁻¹ bis maximal 30*10⁻⁶ K⁻¹, insbesondere etwa 21*10⁻⁶ K⁻¹, aufweisen. Vorteilhafterweise kann die Faserrichtungsverteilung der Glas- und/oder Kohlefasern so gewählt werden, dass die thermische Längsausdehnung des Kragarms an die thermische Ausdehnung des Tragwerks im Bereich zwischen erster und zweiter Festlegevorrichtung angepasst ist, insbesondere die thermische Längsausdehnung des Kragarms an die thermische Ausdehnung des Tragwerks im relevanten Temperaturbereich, insbesondere zwischen -10 und + 30°C, möglichst gleich kommt, und/oder insbesondere mindestens 30 Vol.-% der Glas- und/oder Kohlefasern eine Ausrichtung ihrer Längserstreckung zur Längserstreckung des Kragarms im Bereich von 35° bis 55° aufweisen.

Vorteilhafterweise kann mindestens eine Temperatur des Kragarms, der ersten und/oder zweiten Festlegevorrichtung und/oder des Lagers oder eine Temperatur in deren Umgebung erfasst werden. Vorteilhafterweise kann eine Temperatur des Tragwerks und/oder Bauwerks, insbesondere zwischen und/oder an der ersten und/oder zweiten Festlegevorrichtung, oder in dessen Umgebung, erfasst werden.

Vorteilhafterweise kann auf Basis der erfassten Temperatur, insbesondere Temperaturen, und insbesondere unter Kenntnis des, insbesondere durchschnittlichen, Wärmeausdehnungskoeffizients, insbesondere Längenwärmeausdehnungskoeffizients, entlang und/oder quer zur Erstreckungsrichtung des Abschnitts, des Kragarms, der ersten und/oder zweiten Festlegevorrichtung, des Lagers und/oder des Tragwerks und/oder Bauwerks, und des gemessenen Abstands die Länge bestimmt werden, insbesondere die bestimmte Länge korrigiert werden.

Vorteilhafterweise können über die Zeit mehrere Abstände gemessen und auf Basis der gemessenen Abstände mehrere Längenänderungen bestimmt werden, insbesondere Änderungen der Abstände über die Zeit gemessen und auf Basis der gemessenen Änderungen der Abstände mehrere Änderungen der Länge, insbesondere als Längenänderung des Abschnitts, bestimmt werden.

Die Aufgabe wird auch durch ein Analyseverfahren zur Analyse einer Länge, insbesondere einer Änderung einer Länge, gelöst. Erfindungsgemäß wird die Länge eines Abschnitts eines Tragwerks eines Bauwerks, insbesondere eines Betonbauwerks und/oder Stahlbauwerks, analysiert. Insbesondere wird die Länge des Abschnitts des Tragwerks, das in dem erfindungsgemäßen Bestimmungsverfahren verwendet wird, analysiert. Erfindungsgemäß umfasst das Analyseverfahren den Verfahrensschritt des erfindungsgemäßen Bestimmungsverfahren zum Bestimmen der Länge des Abschnitts des Tragwerks, indem mehrerer Längen und/oder einer Längenänderung, insbesondere mehrere Längenänderungen, im zeitlichen Verlauf, insbesondere über die Zeit, bestimmt werden. Erfindungsgemäß umfasst das Analyseverfahren den Verfahrensschritt des Analysierens der mehreren bestimmten Längen, und den Vergleich der über die Zeit bestimmten Längen. Vorteilhafterweise kann auf Basis des Vergleichs eine Änderung der Länge im zeitlichen Verlauf bestimmt werden und insbesondere die beim Vergleich analysierte Änderung der Länge als eine Verformung des Tragwerks innerhalb des Abschnitts bestimmt werden.

Die Aufgabe wird auch durch ein Überwachungsverfahren gelöst, bei dem ein Abschnitt eines Tragwerks und somit insbesondere ein Teil eines Bauwerks, und insbesondere das Bauwerk, überwacht wird. Dabei erstreckt sich dieser Abschnitt von einer ersten Festlegevorrichtung hin zu einer zweiten Festlegevorrichtung. Die Festlegevorrichtungen können mit geeigneten Verbindungsmitteln an dem Tragwerk festgelegt werden bzw. sein. Vorteilhafterweise können die Länge, der Abschnitt, die Festlegevorrichtungen und das Tragwerk die/das in dem erfindungsgemäßen Bestimmungsverfahren verwendete Länge, Abschnitt, Festlegevorrichtungen und Tragwerk sein.

Das Überwachungsverfahren umfasst dabei den Verfahrensschritt, dass mehrere Längen des Abschnitts bestimmt werden, nämlich Längen zu unterschiedlichen Zeitpunkten, also über die Zeit mehrere Längen. Insbesondere erfolgt die Bestimmung der Längen mittels des erfindungsgemäßen Bestimmungsverfahren und/oder mittels der erfindungsgemäß Messanordnung. Ferner umfasst das Überwachungsverfahren den Verfahrensschritt, dass auf Basis der bestimmten Längen eine Überwachung des Tragwerks, und insbesondere des Bauwerks, durchgeführt wird.

Alternativ umfasst das Überwachungsverfahren den Verfahrensschritt, dass eine über die Zeit erfolgte Verformung aufgrund einer Analyse mehrere Längen des Abschnitts bestimmt werden. Insbesondere erfolgt die Bestimmung der Verformung mittels des erfindungsgemäßen Analyseverfahren und/oder mittels der erfindungsgemäß Messanordnung und einer Rechnereinheit. Ferner umfasst das Überwachungsverfahren den Verfahrensschritt, dass auf Basis der bestimmten Verformungen eine Überwachung des Tragwerks, und insbesondere des Bauwerks, durchgeführt wird.

Die Aufgabe wird auch durch eine Messanordnung zum Bestimmen einer Länge, insbesondere einer Längenänderung, eines sich von einer ersten zu einer zweiten Festlegevorrichtung der Messanordnung erstreckenden Abschnitts eines Tragwerks eines Bauwerks, insbesondere eines Betonbauwerks, insbesondere Spannbetonbauwerks, und/oder Stahlbauwerks, gelöst. Bei dem Tragwerk, dem Abschnitt und der Länge kann es sich insbesondere um die der erfindungsgemäßen Verfahren handeln.

Erfindungsgemäß weist die Messanordnung einen Kragarm auf. Der Kragarm ist mit der ersten Festlegevorrichtung an dem Tragwerk, insbesondere ortsfest, festgelegt. Der Kragarm weist ein freies Ende auf und ist insbesondere gerade. Der Kragarm erstreckt sich ferner von der ersten Festlegevorrichtung, insbesondere hin zu seinem freien Ende. Der Kragarm überspannt dabei den Abschnitt in Richtung zur zweiten Festlegevorrichtung zumindest teilweise. Die zweite Festlegevorrichtung weist ein Messelement auf. Die Messanordnung ist ferner eingerichtet, einen Abstand, insbesondere eine Änderung des Abstandes, zwischen freiem Ende und Messelement, insbesondere induktiv, kapazitiv und/oder optisch, zu messen und auf Basis des gemessenen Abstands die Länge des Abschnitts zu bestimmten. Die Messanordnung weist ein Lager, insbesondere Klemmlager und/oder Gleitlager, auf. Das Lager ist zwischen dem freien Ende des Kragarms und der ersten Festlegevorrichtung angeordnet. Das Lager ist ferner eingerichtet und derart konfiguriert, den Kragarm, insbesondere gegenüber dem Lager in Längsrichtung und/oder der Querrichtung des Kragarms frei beweglich, stützend an dem Tragwerk oder Bauwerk zu lagern. Vorteilhafterweise ist der Kragarm mittels der ersten Festlegevorrichtung ortsfest mit dem Tragwerk verbunden und erstreckt sich von diesem Bereich aus in Richtung der zweiten Festlegevorrichtung und überspannt dabei und somit den Abschnitt zumindest teilweise. Erfindungsgemäß ist der Kragarm zwischen der ersten Festlegevorrichtung und seinem freien Ende mittels des Lagers stützend an dem Tragwerk oder Bauwerk gelagert. Vorteilhafterweise kann es sich bei dem Lager um ein Klemm- und/oder Gleitlager handeln. Vorteilhafterweise kann wegen des Lagers der Kragarm gegenüber dem Lager in Längsrichtung und/oder der Querrichtung des Kragarms frei beweglich sein. Vorteilhafterweise ist das Lager in der Nähe des freien Endes angeordnet, insbesondere mit einem Abstand zum freien Ende von weniger als 25% der Längserstreckung des Abschnitts.

Durch den Einsatz des Lagers und dessen, insbesondere lediglich stützende, Lagerung des Kragarms, insbesondere eine Lagerung in der Nähe des freien Endes des Kragarms, wird die Position des freien Endes stabilisiert, sodass der Abstand zwischen dem freien Ende und dem Messelement präziser gemessen werden kann. Aufgrund der, insbesondere lediglich stützenden, Lagerung ist der Abstand somit nicht an dem Festlegepunkt des Lagers gekoppelt, sodass nicht lediglich Einflüsse zwischen dem Lager und der zweiten Festlegevorrichtung gemessen werden können, sondern vielmehr Einflüsse und Änderungen zwischen der ersten und dem zweiten Festlegevorrichtung gemessen werden können.

Vorteilhafterweise kann der Abschnitt zwischen der ersten und zweiten Festlegevorrichtung eine Längserstreckung von mindestens 0,1 m, insbesondere mindestens 0,2 m, insbesondere mindestens 1 m, und/oder von maximal 50 m, insbesondere maximal 25 m, insbesondere maximal 10 m, insbesondere maximal 5 m, aufweisen. Vorteilhafterweise kann der Kragarm mindestens 50%, insbesondere mindestens 80%, der Längserstreckung des Abschnitts überspannen. Vorteilhafterweise kann mindestens 1 ppb, insbesondere mindestens 1 ppm, insbesondere mindestens 0,01%, und/oder weniger als 20%, insbesondere maximal 10%, insbesondere maximal 1%, insbesondere maximal 0,1 %, der Längserstreckung des Abschnitts nicht von dem Kragarm überspannt sein oder werden, ist der Kragarm insbesondere entsprechend konfiguriert und angeordnet. Vorteilhafterweise kann der nicht von dem Kragarm überspannte Abschnitt zwischen freiem Ende und Messelement angeordnet sein. Dabei ist unter Längserstreckung insbesondere nicht die zu bestimmende Länge des Abschnitts zu verstehen, sondern die ursprünglich eingerichtete Längserstreckung des Abschnitts, deren Länge sich über die Zeit durch weitere Einflüsse, wie beispielsweise Dehnung einzelner Teilabschnitte, verändern kann.

Vorteilhafterweise kann der Kragarm aus, insbesondere über 30 Vol.-%, insbesondere mindestens 40 Vol.-%, insbesondere mindestens 50 Vol.-%, insbesondere mindestens 60 Vol.-%, einem Verbundwerkstoff, insbesondere einem Faserverbundwerkstoff, insbesondere einem Glas- und/oder Kohlefaserverbundwerkstoff, und insbesondere zudem aus einem Harz, insbesondere einem Epoxidharz, insbesondere zu einem Anteil von maximal 60 Vol.-%, insbesondere maximal 40 Vol.-%, und/oder mindestens 10 Vol.-%, insbesondere mindestens 20 Vol.-%, bestehen. Insbesondere beziehen sich die vorgenannten Vol.-% auf das Gesamtvolumen des Kragarms.

Vorteilhafterweise kann das freie Ende, insbesondere ein dem Messelement gegenüberliegende Bereich des freien Endes, eine metallische Beschichtung und/oder aus einem Metall bestehen. Vorteilhafterweise kann das freie Ende, insbesondere ein dem Messelement gegenüberliegende Bereich des freien Endes, eine reflektierende Oberflächenbeschichtung und/oder eine reflektierende Oberfläche aufweisen.

Vorteilhafterweise kann der Verbundwerkstoff Fasern enthalten. Vorteilhafterweise können die Fasern eine Faserlängsausrichtung aufweisen, insbesondere in der sich die Fasern mehr erstrecken als in alle anderen Richtungen. Vorteilhafterweise kann der Verbundwerkstoff mindestens 30 Vol.-% Fasern, insbesondere mindestens 30 Vol.-% Kohlefasern aufweisen.

Vorteilhafterweise handelt es sich bei den Fasern um Carbonfasern. Vorteilhafterweise handelt es sich bei den Fasern um einen Mix aus Kohlefasern und Glas- und/oder Aramidfasern. Insbesondere kann durch eine geeignete Wahl der Fasern einerseits die Wärmeausdehnung in die jeweiligen Richtungen optimiert und gleichzeitig die Druckfestigkeit des Kragarms verbessert werden.

Vorteilhafterweise kann der Kragarm eine Längserstreckung aufweisen, in der sich der Kragarm mehr erstreckt als in alle anderen Richtungen.

Vorteilhafterweise können die Fasern zu deren Faserlängsrichtung eine Wärmeausdehnung von ca. -0,1*10⁻⁶ K⁻¹ und zu deren Faserquerrichtung eine Wärmeausdehnung von ca. 21*10⁻⁶ K⁻¹aufweisen.

Vorteilhafterweise können die Fasern in dem Kragarm so angeordnet sind, dass die Faserlängsausrichtung von mindestens 30 Vol.-%, insbesondere mindestens 50 Vol.-%, insbesondere mindestens 75 Vol.-%, der Fasern in einem Winkel zwischen 35° und 55°, insbesondere zwischen 40° und 50°, insbesondere von 45°, zu der Längserstreckung des Kragarms verläuft.

Vorteilhafterweise kann der Kragarm einen runden, insbesondere kreisrunden, Querschnitt aufweisen.

Vorteilhafterweise kann das Lager ein Klemmlager und/oder ein Gleitlager sein und teilweise, insbesondere ein Halteabschnitt und ein Gleit- oder Klemmabschnitt, aus Kunststoff, insbesondere Polyamid, bestehen oder mit Kunststoff, insbesondere Polyamid, beschichtet sein, und insbesondere eine Aufnahme des Lagers zum stützenden Lagern des Kragarms aus Aluminium bestehen.

Vorteilhafterweise kann das Lager derart dimensioniert und eingerichtet sein, dass der in dem Lager stützend gelagerte Kragarm sich frei mindestens 1 mm, insbesondere mindestens 1 cm, in mindestens zwei der sechs, insbesondere alle, Richtungen bewegen kann.

Vorteilhafterweise kann die Messanordnung mindestens einen Temperatursensor aufweisen. Vorteilhafterweise kann einer des mindestens einen Temperatursensor eingerichtet sein, Temperaturen am Kragarm, Lager ersten und/oder zweiten Festlegevorrichtung zu erfassen, und/oder einer des mindestens einen Temperatursensor eingerichtet sein, Temperaturen am Abschnitt, insbesondere am Tragwerk und/oder Bauwerk, zu erfassen

Vorteilhafterweise handelt es sich bei dem Bauwerk um ein Betonbauwerk, das größtenteils, insbesondere zu zumindest 50 Gew.-%, aus Beton besteht. Vorteilhafterweise kann es sich bei dem Betonbauwerk um ein Spannbetonbauwerk handeln. Es ist auch möglich, dass Teile des Bauwerks aus Beton, insbesondere Spannbeton, und andere Teile aus anderem Material hergestellt werden, also das Bauwerk teils ein Betonbauwerk, beispielsweise ein Spannbetonbauwerk, teils auch ein anderes Bauwerk, bspw. ein Stahlbauwerk, sein kann.

Vorteilhafterweise handelt es sich bei dem Bauwerk um ein Stahlbauwerk, das größtenteils, insbesondere zu zumindest 50 Gew.-%, aus Stahl besteht. Es ist auch möglich, dass Teile des Bauwerks aus Stahl und andere Teile aus anderem Material, wie bspw. Beton, insbesondere Spannbeton, hergestellt werden, also das Bauwerk teils ein Stahlbauwerk teils auch ein anderes Bauwerk, bspw. ein Betonbauwerk, sein kann.

Vorteilhafterweise umfasst die erste Festlegevorrichtung eine Konsole und/oder ein Klemmlager zum ortsfesten Verbinden des Kragarms mit dem Tragwerk, insbesondere besteht die erste Festlegevorrichtung hieraus.

Vorteilhafterweise kann die Messanordnung eine Abdeckung aufweisen, die sich zumindest entlang des Abschnitts erstreckt und die die erste und zweite Festlegevorrichtung, das Messelement, den Kragarm und das Lager zumindest in zwei der sechs Raumrichtungen, insbesondere zumindest in drei der sechs Raumrichtungen, umschließt.

Vorteilhafterweise kann das Lager ein Flansch-Klemmverbinder mit einem, insbesondere durch eine Schraube betätigbaren, Klemmbacken sein. Vorteilhafterweise können bei dem Flansch-Klemmverbinder zum stützenden Lagern des Kragarms die Klemmbacken nicht vollständig, insbesondere bis zu einem Abstand von mindestens 1 mm zum Kragarm, angezogen sein oder werden.

Vorteilhafterweise kann das Messelement induktiv, kapazitiv, optisch oder mittels Wirbelstrommesstechnik den Abstand messen oder ein induktives, optisches kapazitives Messelement sein, wobei insbesondere das freie Ende des Kragarms für die induktiv, kapazitiv, optische oder mittels Wirbelstrommesstechnik Messtechnik eingerichtet ist.

Vorteilhafterweise kann die Messanordnung eine Rechnereinheit aufweisen oder eine Kommunikationseinheit zum Kommunizieren mit einer entfernten Rechnereinheit, aufweisen.

Gelöst wird die Aufgabe auch durch ein Tragwerk für ein Bauwerk, insbesondere ein Stahlbauwerk und/oder Betonbauwerk, insbesondere Spannbetonbauwerk, mit mindestens einer darauf angeordneten erfindungsgemäßen Messanordnung.

Vorteilhafterweise kann das Tragwerk Teil eines vorwiegend aus Beton und/oder Stahl bestehendes Bauwerk sein.

Vorteilhafterweise kann das Bauwerk insbesondere eine Brücke, insbesondere eine Landbrücke oder Seebrücke, oder ein Parkhaus sein.

Vorteilhafterweise werden mehrere erfindungsgemäße Messanordnungen an dem Tragwerk angeordnet und/oder werden Längen mehrerer, unterschiedlich angeordneter Abschnitte bestimmt, indem mehrere erste und zweite Festlegevorrichtungen an dem Tragwerk festgelegt werden, die jeweils einen Abschnitt zum Messen des Abstands und somit zum Bestimmen der Länge des Abschnitts definieren. Vorteilhafterweise verlaufen die Abschnitte parallel zu einander oder zumindest einige der Abschnitte verlaufen parallel zueinander. Vorteilhafterweise werden die Abschnitte, die ersten und/oder zweiten Festlegevorrichtungen so angeordnet, dass die Abschnitte einen größeren Bereich des Betonbauwerks abdecken. Durch die Verwendung weitere Abschnitte, können die relevanten Abschnitte des Tragwerks beispielsweise simultan analysiert und/oder überwacht werden.

Vorteilhafterweise kann das Tragwerk ein mindestens einen Stab und/oder Balken aufweisendes Stabtragwerk, insbesondere aus Stahl, sein. Vorteilhafterweise besteht der Stab und/oder der Balken aus Stahl. Vorteilhafterweise kann der Abschnitt Teil des Stabs und/oder Balkens sein. Vorteilhafterweise kann das Lager und/oder die ersten und/oder zweite Festlegevorrichtung an dem Stab und/oder Balken angeordnet sein.

Vorteilhafterweise kann das Tragwerk ein mindestens eine Platte und/oder Scheibe aufweisendes Flächentragwerk, insbesondere Massivtragwerk, insbesondere aus Beton, sein. Vorteilhafterweise kann das Flächentragwerk, insbesondere Massivtragwerk, ein ebenes Flächentragwerk, insbesondere Massivtragwerk, sein. Vorteilhafterweise besteht die Platte und/oder Scheibe aus Beton, insbesondere Spannbeton. Vorteilhafterweise kann der Abschnitt Teil der Platte und/oder Scheibe s sein. Vorteilhafterweise kann das Lager und/oder die ersten und/oder zweite Festlegevorrichtung an der Platte und/oder Scheibe angeordnet sein.

Vorteilhafterweise kann der Abschnitt, der Stab, der Balken, die Scheibe und/oder die Platte horizontal oder in einem Winkel von weniger als 35%, insbesondere weniger als 30%, insbesondere maximal 20%, zur Horizontalen verlaufen. Vorteilhafterweise kann sich der Abschnitt, der Stab, der Balken, die Scheibe und/oder die Platte horizontal oder in einem Winkel von weniger als 35%, insbesondere weniger als 30%, insbesondere maximal 20%, zur Horizontalen erstrecken.

Vorteilhafterweise wird das erfindungsgemäße Verfahren oder werden die erfindungsgemäßen Verfahren in und/oder mit einer erfindungsgemäßen Messanordnung und/oder in und/oder an einem erfindungsgemäßen Tragwerk ausgeführt.

Vorteilhafterweise ist die erfindungsgemäße Messanordnung und/oder das erfindungsgemäße Tragwerk eingerichtet zum Ausführen und/oder Durchführen des oder der erfindungsgemäßen Verfahren(s).

Durch die Erfindung wird insbesondere ein Verfahren bzw. ein System bereitgestellt, mit dem bzw. das eine langzeitstabile und präzise Bestimmung bzw. Überwachung eines Tragwerks ermöglicht wird.

Weitere vorteilhafte Ausführungsformen ergeben sich exemplarisch aus der nachstehenden Beschreibung eines Ausführungsbeispiels anhand der beigefügten schematischen Figuren. Dabei zeigt:
- Fig. 1: eine schematische Darstellung der Messanordnung mit Darstellung des Abschnitts und dessen Länge sowie des zu messenden Abstandes und
- Fig. 2: eine schematische Darstellung einer Messanordnung an einem Tragwerk eines Bauwerks, auf dem sich bspw. Fahrzeuge bewegen.

Dabei werden die Ausführungsbeispiele in den Figuren skizzenhaft dargestellt, so dass einzelne Merkmale der Erfindung besonders einfach und deutlich ersichtlich sind. Die Größenverhältnisse müssen somit nicht realitätsnah dargestellt sein. In den Figuren sind gleiche Elemente mit gleichen Bezugszeichen versehen.

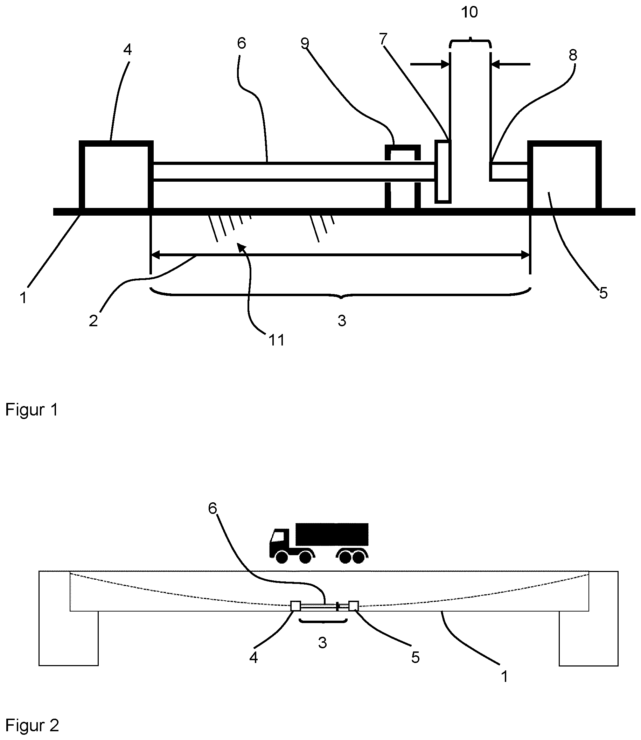

In der in der Figur 1 dargestellten Skizze ist ein erstes Ausführungsbeispiel dargestellt, nämlich in Form einer schematischen Darstellung eines Teils eines Tragwerks 1 Bauwerks. Das Tragwerk 1 ist in der Figur 1 lediglich als Linie dargestellt, verfügt in der Realität in der Regel eine deutlich komplexere Ausgestaltung. Eine solche ist in Figur 2 angedeutet, wobei die Ausführungsform, wie in der Figur 2 dargestellt, jedoch später beschrieben wird.

Mithilfe einer erfindungsgemäßen Messanordnung bzw. anhand eines erfindungsgemäßen Verfahrens lässt sich nun die Länge eines Abschnitts des Tragwerks 1 bestimmen und gegebenenfalls analysieren bzw. überwachen.

Zu erkennen ist, dass eine Messanordnungen bzw. eine Messtrecke aufgebaut wird, nämlich durch eine erste Festlegevorrichtung 4 und eine zweite Festlegevorrichtung 5. Diese beiden Festlegevorrichtungen 4, 5 werden mit bekannten Mitteln am Tragwerk 1 festgelegt, bspw. damit verschraubt. Durch diese Festlegung sind die Festlegevorrichtungen 4, 5 jeweils ortsfest mit dem Tragwerk 1 verbunden. Hierdurch ist und wird ein Teil des Tragwerks 1 definiert, nämlich ein Abschnitt 2 des Tragwerks 1. Unter anderem in diesem Abschnitt 2 des Tragwerks 1 können nun Dehnungen 11 (aber auch Schrumpfungen) innerhalb des Tragwerks 1 entstehen, die beispielsweise anlässlich Temperaturänderungen in oder Belastungen auf dem Abschnitt 2 des Tragwerks 1 entstehen oder wegen Temperaturänderungen in oder Belastungen auf dem Bauwerk oder Teilen davon induziert werden können. Unter anderem aufgrund dieser Dehnungen 11 kann sich nun die Länge 3 des Abschnitts im Laufe der Zeit bei Vorhandensein bestimmter Bedingungen, wie Temperaturänderungen oder Belastungen, ändern. Dabei kann sich die Länge mehrmals ändern. Mithilfe der erfindungsgemäßen Messanordnung bzw. des erfindungsgemäßen Verfahrens lässt sich diese Länge 3 und insbesondere die Änderungen der Länge besonders einfach und genau bestimmen bzw. lässt sich diese einfach analysieren und der Abschnitt überwachen.

Hierfür ist wie in der Figur 1 dargestellt vorgesehen, dass an der erste Festlegevorrichtung 4 ein Kragarm 6 angeordnet, bspw. eingespannt ist. Dieser Kragarm 6, der ein freies Ende 7 aufweist, das von der ersten Festlegevorrichtung 4 beabstandet, insbesondere maximal beabstandet, ist, ist nun so dimensioniert und angeordnet, dass sich dieser Kragarm 6 bis hin zu seinem freien Ende 7 entlang des Abschnitts 2 zumindest teilweise, vorzugsweise größtenteils erstreckt. Der Kragarm 6 überspannt somit den Abschnitt 2 von der ersten Festlegevorrichtung 4 bis hin zu seinem freien Ende 7, wobei die Längserstreckung des Kragarms 6 zwischen der ersten Festlegevorrichtung 4 und dem freien Ende 7 bekannt ist bzw. Änderungen dieser bestimmt werden können bspw. durch Kenntnis von Temperaturänderungen, bspw. aufgrund einer Erfassung der Temperatur des oder in der Umgebung des Kragarms 6, bspw. mittels eines Temperatursensors. Durch die Überspannung des Abschnitts 2 mittels des Kragarms 6 wird ein relativ langer Abschnitt 2 bestimmbar. Da das freie Ende 7 frei über den Abschnitt 2 schwebt, ist dieses freie Ende auch bspw. Vibrationen ausgesetzt. Hierdurch kann eine auf der Position des freien Ende 7 basierende Messung zu Ungenauigkeiten führen.

Aus diesem Grund ist ein Lager 9 vorgesehen, mit dem der Kragarm 6 stützend gelagert wird. In dem Ausführungsbeispiels ist dieses Lager 9 nun an dem Tragwerk 1 festgelegt. Möglich wären jedoch auch andere Positionen des Festlegens, beispielsweise an anderen Teilen des Bauwerks. Durch die stützende Lagerung wird erreicht, dass sich der Kragarm 6 zwar noch entlang der Längserstreckung des Abschnitts 2 und des Kragarms 6 frei bewegen kann, somit eine Änderung der Länge 3 des Abschnitts 2 nicht behindert wird, gleichwohl zumindest in einer weiteren Richtung, der Kragarm 6 gestützt wird, sodass beispielsweise Vibrationen abgefangen werden können. Hierdurch wird der Kragarm 6 und insbesondere dessen freies Ende 7 stabilisiert.

Ferner ist vorgesehen, dass an der zweiten Festlegevorrichtung 5 ein Messelement 8 angeordnet ist bzw. wird. Das Messelement 8 kann nun in Richtung der ersten Festlegevorrichtung 4 hervorstehen oder direkt mit der zweiten Festlegevorrichtung 5 fluchtend angeordnet sein. Jedenfalls solange der Abstand zwischen Messelement 8 und dem Festlegepunkt der zweiten Festlegevorrichtung 5 mit dem Tragwerk 1 bekannt ist, kann dann durch Messen des Abstands 10 zwischen Messelement 8 und freiem Ende 7 auf die Länge 3 des Abschnitts 2 geschlossen werden, da auch der Abstand zwischen dem freien Ende 7 und zumindest dem Festlegepunkt der ersten Festlegevorrichtung 4 mit dem Tragwerk 1 bekannt ist. Gleichfalls stellt die Größe des Abstands 11 zwischen Messelement 8 und freiem Ende 7 eine Messgröße dar, die kleiner ist als eine Messgröße der Länge 3 des Abschnitts 2. Hierdurch fallen etwaige instrumentelle Ungenauigkeiten beim Messen aufgrund der geringeren Dimension der Messgröße weniger ins Gewicht. Aus diesem Grund kann aufgrund geringer ausfallender instrumenteller Messungenauigkeiten durch die Messung des Abstandes 10 zwischen freiem Ende 7 und Messelement 8 die Länge 3 des Abschnitts 2 und deren Änderung genauer bestimmt werden. Diese Verbesserung wird weiter dadurch erhöht, da das Lager 9 den Kragarm 6 und somit dessen freien Ende 7 stützend lagert, sodass während einer Messung des Abstandes 10 der Ort des freien Endes 7 stabiler ist und somit eine bessere Messung des Abstandes 10 ermöglicht wird.

Aus diesem Grund ist es vorteilhaft, wenn wie auch in dem in der Figur 1 dargestellten Ausführungsbeispiel das Lager 9 in der Nähe des freien Endes 7 und nicht in der Nähe der ersten Festlegevorrichtung 4 angeordnet ist.

In der Figur 2 ist eine mögliche Implementierung der erfindungsgemäßen Messanordnung bzw. der Verwendung des erfindungsgemäßen Verfahrens an einer Brücke, die ein Tragwerk 1 umfasst, schematisch dargestellt. Auf der Brücke fahren zu unterschiedlichen Zeiten abwechselnd viele ungleiche Fahrzeuge und beanspruchen somit Teile des Tragwerks und Teile des Bauwerks unterschiedlich stark. Um nun das Tragwerk und damit auch das Bauwerk zu überwachen, oder zumindest bestimmte Abschnitte davon, kann nun die Länge 3 eines solchen Abschnitt bestimmt werden, nämlich mithilfe der erfindungsgemäßen Messanordnung bzw. dem erfindungsgemäßen Verfahren, bei dem der Abstand zwischen dem freien Ende des an der ersten Festlegevorrichtung 4 angeordneten Kragarms 6 und einem an der zweiten Festlegevorrichtung 5 angeordneten Messelement gemessen und auf dessen Basis die Länge 3 bestimmt wird.

### Bezugszeichenliste:

- 1.: Tragwerk
- 2.: Abschnitt
- 3.: Länge des Abschnitts
- 4.: erste Festlegevorrichtung
- 5.: zweite Festlegevorrichtung
- 6.: Kragarm
- 7.: freies Ende des Kragarms
- 8.: Messelement
- 9.: Lager
- 10.: Abstand
- 11.: über die Zeit auftretende Dehnungen in dem Tragwerk

## Patentansprüche

1. Verfahren zum Bestimmen einer Länge (3), insbesondere einer Längenänderung, eines sich von einer ersten zu einer zweiten an einem Tragwerk (1) eines Bauwerks, insbesondere Betonbauwerks oder Stahlbauwerks, insbesondere ortsfest, festgelegten Festlegevorrichtung (4, 5) erstreckenden Abschnitts (2) des Tragwerks (1), wobei ein Abstand (10), insbesondere eine Änderung eines Abstands, zwischen einem freien Ende (7) eines an der ersten Festlegevorrichtung (4) angeordneten, den Abschnitt (2) in Richtung zur zweiten Festlegevorrichtung (5) zumindest teilweise überspannenden, insbesondere geraden, Kragarms (6) und einem an der zweiten Festlegevorrichtung (5) angeordneten Messelement (8), insbesondere induktiv, kapazitiv und/oder optisch, gemessen wird, wobei der Kragarm (6) zwischen der ersten Festlegevorrichtung (4) und seinem freien Ende (7) mittels mindestens eines Lagers (9), insbesondere Klemm- und/oder Gleitlager, stützend an dem Tragwerk (1) oder Bauwerk gelagert ist und, und wobei auf Basis des gemessenen Abstands (10), insbesondere der gemessenen Anstandsänderung, zwischen dem freien Ende (7) und dem Messelement (8) die Länge (3), insbesondere die Längenänderung, bestimmt wird.

2. Verfahren nach Anspruch 1, umfassend die Bereitstellung des Kragarms (6) als einen an die thermische Ausdehnung des Tragwerks (1), insbesondere zumindest entlang des Abschnitts (2), angepassten Kragarm (6), insbesondere durch Anpassung dessen Längsausdehnung oder eines Längsausdehnungskoeffizients eines Materials des Kragarms (6), wobei die Anpassung durch den Kragarm (6) erfolgt, der aus Glas- und/oder Kohlefaserverbundwerkstoff gebildet ist und/oder der eine angepasste Faserrichtungsverteilung aufweist, wobei die thermische Ausdehnung der Glas- und/oder Kohlefasern des Glas- und/oder Kohlefaserverbundwerkstoffs in deren Faserlängsrichtung eine Wärmeausdehnung von mindestens - 30*10⁻⁶ K⁻¹ bis maximal + 60*10⁻⁶ K⁻¹, insbesondere mindestens - 10*10⁻⁶ K⁻¹ bis maximal + 10*10⁻⁶ K⁻¹, insbesondere mindestens - 1*10⁻⁶ K⁻¹ bis maximal 0*10⁻⁶ K⁻¹, insbesondere etwa -0,1*10⁻⁶ K⁻¹, und zu deren Faserquerrichtung eine Wärmeausdehnung von mindestens - 30*10⁻⁶ K⁻¹ bis maximal + 60*10⁻⁶ K⁻¹, insbesondere mindestens 0*10⁻⁶ K⁻¹ bis maximal + 40*10⁻⁶ K⁻¹, insbesondere mindestens 10*10⁻⁶ K⁻¹ bis maximal 30*10⁻⁶ K⁻¹, insbesondere etwa 21*10⁻⁶ K⁻¹, aufweisen und wobei die Faserrichtungsverteilung der Glas- und/oder Kohlefasern so gewählt wird, dass die thermische Längsausdehnung des Kragarms (6) an die thermische Ausdehnung des Tragwerks (1) im Bereich zwischen erster und zweiter Festlegevorrichtung (4, 5) angepasst ist, insbesondere die thermische Längsausdehnung des Kragarms (6) an die thermische Ausdehnung des Tragwerks (1) im relevanten Temperaturbereich, insbesondere zwischen -10 und + 30°C, möglichst gleich kommt, und/oder insbesondere min 30 Gew.-% der Glas- und/oder Kohlefasern eine Ausrichtung ihrer Längserstreckung zur Längserstreckung des Kragarms (6) im Bereich von 35° bis 55° aufweisen.

3. Verfahren nach einem der voranstehenden Ansprüche, wobei eine Temperatur des Kragarms (6), der ersten und/oder zweiten Festlegevorrichtung (4, 5) und/oder des Lagers (9) oder in deren Umgebung erfasst wird und/oder wobei eine Temperatur des Tragwerks (1), insbesondere zwischen und/oder an der ersten und/oder zweiten Festlegevorrichtung (4, 5), oder in dessen Umgebung, erfasst wird, wobei insbesondere auf Basis der erfassten Temperatur, insbesondere Temperaturen, und insbesondere unter Kenntnis des, insbesondere durchschnittlichen, Wärmeausdehnungskoeffizients, insbesondere Längenwärmeausdehnungskoeffizients, entlang und/oder quer zur Erstreckungsrichtung des Abschnitts (2), des Kragarms (6), der ersten und/oder zweiten Festlegevorrichtung (4, 5), des Lagers (9) und/oder des Tragwerk (1) oder Bauwerks, und des gemessenen Abstands (10) die Länge (3) bestimmt wird, insbesondere die bestimmte Länge korrigiert wird.

4. Verfahren nach einem der voranstehenden Ansprüche, wobei über die Zeit mehrere Abstände (10) gemessen und auf Basis der gemessenen Abstände (10) mehrere Längen (3) bestimmt werden, insbesondere Änderungen der Abstände (10) über die Zeit gemessen und auf Basis der gemessenen Änderungen der Abstände (10) mehrere Änderungen der Länge (3), insbesondere als Längenänderung (3) des Abschnitts (2), insbesondere über die Zeit, bestimmt werden.

5. Verfahren zum Analysieren einer Länge (3) eines sich von einer ersten zu einer zweiten Festlegevorrichtung (4, 5) erstreckenden Abschnitts (2) eines Tragwerks (1) eine Bauwerks, insbesondere eines Betonbauwerks oder eine Stahlbauwerks, wobei mehrere Längen des Abschnitts nach dem Verfahren nach Anspruch 4 über die Zeit bestimmt werden, wobei die Analyse einen Vergleich der über die Zeit bestimmten Längen umfasst und insbesondere eine beim Vergleich analysierte Änderung der Länge als eine Verformung des Tragwerks innerhalb des Abschnitts bestimmt wird.

6. Verfahren zur Überwachung eines sich von einer ersten zu einer zweiten Festlegevorrichtung (4, 5) erstreckenden Abschnitts (2) eines Tragwerks (1) eines Bauwerks, insbesondere eines Betonbauwerks oder eine Stahlbauwerks, wobei über die Zeit mehrere Längen (3) des Abschnitts (2) nach dem Verfahren nach Anspruch 4 oder aufgrund einer Analyse von Längen (3) des Abschnitts (2) des Tragwerks (1) Verformungen gemäß dem Verfahren nach Anspruch 5 bestimmt werden, und auf Basis der bestimmten Längen (3) oder Verformungen eine Überwachung des Tragwerks (1) oder des Bauwerks durchgeführt wird.

7. Messanordnung zum Bestimmen einer Länge (3), insbesondere einer Längenänderung (3), eines sich von einer ersten zu einer zweiten Festlegevorrichtung (4, 5) der Messanordnung erstreckenden Abschnitts (2) eines Tragwerks (1) eines Betonbauwerks, insbesondere Spannbetonbauwerks, oder Stahlbauwerks, wobei die Messanordnung einen mit der ersten Festlegevorrichtung (4) an dem Tragwerk (1), insbesondere ortsfest, festgelegten, ein freies Ende (7) aufweisenden, insbesondere geraden, Kragarm (6) und die zweite Festlegevorrichtung (5) ein Messelement (8) aufweist, wobei sich der Kragarm (6) von der ersten Festlegevorrichtung (4) den Abschnitt (2) in Richtung zur zweiten Festlegevorrichtung (5) zumindest teilweise überspannend, insbesondere hin zu seinem freien Ende (7), erstreckt und die Messanordnung eingerichtet ist, einen Abstand (10) , insbesondere eine Änderung des Abstandes (10), zwischen freiem Ende (7) und Messelement (8), insbesondere induktiv, kapazitiv und/oder optisch, zu messen und auf Basis des gemessenen Abstands (10) die Länge (3) des Abschnitts (2) zu bestimmten, **dadurch gekennzeichnet, dass** die Messanordnung ein, zwischen dem freien Ende (7) des Kragarms (6) und der ersten Festlegevorrichtung (4) angeordnetes Lager (9), insbesondere Klemmlager und/oder Gleitlager, aufweist, das eingerichtet ist, den Kragarm (6), insbesondere gegenüber dem Lager (9) in Längsrichtung des Kragarms (6) frei beweglich, stützend an dem Tragwerk (1) oder Bauwerk zu lagern.

8. Messanordnung nach dem voranstehenden Anspruch, wobei der Abschnitt (2) zwischen der ersten und zweiten Festlegevorrichtung (4, 5) eine Längserstreckung von mindestens 0,1 m, insbesondere mindestens 0,2 m, insbesondere mindestens 1 m, und/oder von maximal 50 m, insbesondere maximal 25 m, insbesondere maximal 10 m, insbesondere maximal 5 m, aufweist und der Kragarm (6) mindestens 50%, insbesondere mindestens 80%, der Längserstreckung des Abschnitts (2) überspannt, und insbesondere mindestens 1 ppb, insbesondere mindestens 1 ppm, insbesondere mindestens 0,01%, und/oder weniger als 20%, insbesondere maximal 10%, insbesondere maximal 1%, insbesondere maximal 0,1%, der Längserstreckung des Abschnitts (2) nicht von dem Kragarm (6) überspannt wird, wobei insbesondere dieser nicht von dem Kragarm (6) überspannte Abschnitt (2) zwischen freiem Ende (7) und Messelement (8) angeordnet ist.

9. Messanordnung nach einem der Ansprüche nach einem der Ansprüche 7 bis 8, wobei der Kragarm (6) aus, insbesondere über 30 Vol.-%, insbesondere mindestens 40 Vol.-%, insbesondere mindestens 50 Vol.-%, insbesondere mindestens 60 Vol.-%, einem Verbundwerkstoff, insbesondere einem Faserverbundwerkstoff, insbesondere einem Glas-, Aramid- und/oder Kohlefaserverbundwerkstoff, besteht, und der Verbundwerkstoff insbesondere Fasern enthält, wobei die Fasern zu deren Faserlängsrichtung eine Wärmeausdehnung von mindestens - 30*10⁻⁶ K⁻¹ bis maximal 60*10⁻⁶ K⁻¹, insbesondere mindestens - 10*10⁻⁶ K⁻¹ bis maximal 10*10⁻⁶ K⁻¹, insbesondere mindestens - 1*10⁻⁶ K⁻¹ bis maximal 0*10⁻⁶ K⁻¹, insbesondere etwa -0,1*10⁻⁶ K⁻¹, und zu deren Faserquerrichtung eine Wärmeausdehnung von mindestens - 30*10⁻⁶ K⁻¹ bis maximal 60*10⁻⁶ K⁻¹, insbesondere mindestens 0*10⁻⁶ K⁻¹ bis maximal 40*10⁻⁶ K⁻¹, insbesondere mindestens 10*10⁻⁶ K⁻¹ bis maximal 30*10⁻⁶ K⁻¹, insbesondere etwa 21*10⁻⁶ K⁻¹, aufweisen.

10. Messanordnung nach dem voranstehenden Anspruch, wobei der Verbundwerkstoff Fasern enthält, wobei der Kragarm (6) eine Längserstreckung aufweist, in der sich der Kragarm (6) mehr erstreckt als in alle anderen Richtungen, und die Fasern eine Faserlängsausrichtung aufweisen, in der sich die Fasern mehr erstrecken als in alle anderen Richtungen, wobei die Fasern in dem Kragarm (6) so angeordnet sind, dass die Faserlängsausrichtung von mindestens 30 Vol.-%, insbesondere mindestens 50 Vol.-%, insbesondere mindestens 75 Vol.-%, der Fasern in einem Winkel zwischen 35° und 55° zu der Längserstreckung des Kragarm (6) verläuft.

11. Messanordnung nach einem der einem der Ansprüche 7 bis 10, wobei das Lager (9) derart dimensioniert und eingerichtet ist, dass der in dem Lager (9) stützend gelagerte Kragarm (6) sich frei mindestens 1 mm, insbesondere mindestens 1 cm, in mindestens zwei der sechs, insbesondere alle, Richtungen bewegen kann.

12. Messanordnung nach einem der einem der Ansprüche 7 bis 11, wobei die Messanordnung mindestens einen Temperatursensor aufweist, wobei insbesondere einer des mindestens einen Temperatursensor eingerichtet ist, Temperaturen am Kragarm (6), Lager (9), ersten und/oder zweiten Festlegevorrichtung (4, 5) zu erfassen, und/oder einer des mindestens einen Temperatursensor eingerichtet ist, Temperaturen am Abschnitt (2), insbesondere am Tragwerk (1) oder Bauwerk, zu erfassen.

13. Messanordnung nach einem der einem der Ansprüche 7 bis 12, wobei das Lager (9) ein Flansch-Klemmverbinder mit einem, insbesondere durch eine Schraube betätigbaren, Klemmbacken ist, wobei zum stützenden Lagern des Kragarms (6) die Klemmbacken nicht vollständig, insbesondere bis zu einem Abstand von mindestens 1 mm zum Kragarm (6), angezogen sind oder werden.

14. Messanordnung nach einem der einem der Ansprüche 7 bis 13, wobei das Messelement (8) induktiv, kapazitiv, optisch oder mittels Wirbelstrommesstechnik den Abstand (10) misst, wobei insbesondere das freie Ende (7) für die induktiv, kapazitiv, optische oder mittels Wirbelstrommesstechnik Messtechnik eingerichtet ist.

15. Tragwerk (1) für ein Betonbauwerk, insbesondere Spannbetonbauwerk, und/oder Stahlbauwerks mit mindestens einer darauf angeordneten Messanordnung nach einem der Ansprüche 7 bis 14, wobei das Tragwerk (1) insbesondere Teil eines vorwiegend aus Beton und/oder Stahl bestehendes Bauwerk ist, wobei das Bauwerk insbesondere eine Brücke, insbesondere eine Landbrücke oder Seebrücke, oder ein Parkhaus ist.

## Claims

1. Method for determining a length (3), in particular a change in length, of a section (2) of a supporting structure (1) extending from a first to a second fixing device (4, 5) fixed to a supporting structure (1) of a building, in particular a concrete building or steel building, in particular a stationary one, wherein a distance (10), in particular a change in a distance, between a free end (7) of a cantilever arm (6) arranged on the first fixing device (4) and at least partially spanning the section (2) in the direction of the second fixing device (5), in particular a straight cantilever arm, and a measuring element (8) arranged on the second fixing device (5) in particular inductively, capacitively and/or optically, wherein the cantilever arm (6) is supported between the first fixing device (4) and its free end (7) by means of at least one bearing (9), in particular a clamping and/or sliding bearing, and wherein the length (3), in particular the change in length, is determined on the basis of the measured distance (10), in particular the measured change in distance, between the free end (7) and the measuring element (8).

2. Method according to claim 1, comprising the provision of the cantilever arm (6) as a cantilever arm (6) adapted to the thermal expansion of the supporting structure (1), in particular at least along the section (2), in particular by adapting its longitudinal expansion or a longitudinal expansion coefficient of a material of the cantilever arm (6), wherein the adaptation is effected by the cantilever arm (6) being formed from glass and/or carbon fibre composite material and/or having an adapted fibre orientation distribution, wherein the thermal expansion of the glass and/or carbon fibres of the glass and/or carbon fibre composite material in their longitudinal fibre direction is a thermal expansion of at least - 30*10⁻⁶K⁻¹ to a maximum of +60*10⁻⁶K⁻¹, in particular at least -10*10⁻⁶K⁻¹ to a maximum of +10*10⁻⁶K⁻¹, in particular at least -1*10⁻⁶K⁻¹ to a maximum of 0*10⁻⁶K⁻¹, in particular approximately -0.1*10⁻⁶K⁻¹, and in the transverse direction of the fibres a thermal expansion of at least -30*10⁻⁶K⁻¹ to a maximum of +60*10⁻⁶K⁻¹, in particular at least 0*10⁻⁶K⁻¹ to a maximum of +40*10⁻⁶K⁻¹, in particular at least 10*10⁻⁶K⁻¹ to a maximum of 30*10⁻⁶K⁻¹, in particular approximately 21*10⁻⁶K⁻¹, and wherein the fibre orientation distribution of the glass and/or carbon fibres is selected such that the thermal longitudinal expansion of the cantilever arm (6) is adapted to the thermal expansion of the supporting structure (1) in the region between the first and second fixing devices (4, 5), in particular the thermal longitudinal expansion of the cantilever arm (6) is as close as possible to the thermal expansion of the supporting structure (1) in the relevant temperature range, in particular between -10 and +30°C, and/or in particular at least 30% by weight of the glass and/or carbon fibres have an alignment of their longitudinal extension to the longitudinal extension of the cantilever arm (6) in the range from 35° to 55°.

3. Method according to one of the preceding claims, wherein a temperature of the cantilever arm (6), the first and/or second fixing device (4, 5) and/or the bearing (9) or in their vicinity is detected and/or wherein a temperature of the supporting structure (1) in particular between and/or at the first and/or second fixing device (4, 5), or in its vicinity, is detected, wherein, in particular, based on the detected temperature, in particular temperatures, and in particular with knowledge of the, in particular average, coefficient of thermal expansion, in particular coefficient of linear thermal expansion, along and/or transverse to the direction of extension of the section (2), the cantilever arm (6), the first and/or second fixing device (4, 5), the bearing (9) and/or the supporting structure (1) or building, and the measured distance (10), the length (3) is determined, in particular the determined length is corrected.

4. Method according to one of the preceding claims, wherein several distances (10) are measured over time and several lengths (3) are determined on the basis of the measured distances (10), in particular changes in the distances (10) are measured over time and several changes in the length (3), in particular as a change in length (3) of the section (2), in particular over time.

5. Method for analysing a length (3) of a section (2) of a supporting structure (1) extending from a first to a second fixing device (4, 5), wherein several lengths of the section are determined over time according to the method according to claim 4, wherein the analysis comprises a comparison of the lengths determined over time and, in particular, a change in length analysed during the comparison is determined as a deformation of the supporting structure within the section.

6. Method for monitoring a section (2) of a supporting structure (1) of a building, in particular a concrete building or a steel building, extending from a first to a second fixing device (4, 5), wherein several lengths (3) of the section (2) are determined over time according to the method according to claim 4 or on the basis of an analysis of lengths (3) of the section (2) of the supporting structure (1) are determined according to the method according to claim 5, and monitoring of the supporting structure (1) or the building is carried out on the basis of the determined lengths (3) or deformations.

7. Measuring arrangement for determining a length (3), in particular a change in length (3), of a section (2) of a supporting structure (1) of a concrete structure, in particular a prestressed concrete structure, or a steel structure, extending from a first to a second fixing device (4, 5) of the measuring arrangement, wherein the measuring arrangement comprises a measuring element (6) connected to the first fixing device (4) on the supporting structure (1), in particular fixed, having a free end (7), in particular straight, and the second fixing device (5) has a measuring element (8), wherein the cantilever arm (6) extends from the first fixing device (4) at least partially spanning the section (2) in the direction of the second fixing device (5), in particular towards its free end (7), and the measuring arrangement is designed to measure a distance (10), in particular a change in the distance (10), between the free end (7) and the measuring element (8), in particular inductively, capacitively and/or optically, and to determine the length (3) of the section (2) on the basis of the measured distance (10), **characterised in that** the measuring arrangement has a bearing (9) arranged between the free end (7) of the cantilever arm (6) and the first fixing device (4) (9), in particular a clamp bearing and/or a slide bearing, which is designed to support the cantilever arm (6) on the supporting structure (1) or building in such a way that it can move freely, in particular relative to the bearing (9) in the longitudinal direction of the cantilever arm (6).

8. Measuring arrangement according to the preceding claim, wherein the section (2) between the first and second fixing devices (4, 5) has a longitudinal extension of at least 0.1 m, in particular at least 0.2 m, in particular at least 1 m, and/or a maximum of 50 m, in particular a maximum of 25 m, in particular a maximum of 10 m, in particular a maximum of 5 m, and the cantilever arm (6) spans at least 50%, in particular at least 80%, of the longitudinal extension of the section (2), and in particular at least 1 ppb, in particular at least 1 ppm, in particular at least 0.01%, and/or less than 20%, in particular a maximum of 10%, in particular a maximum of 1%, in particular a maximum of 0.1%, of the longitudinal extension of the section (2) is not spanned by the cantilever arm (6), wherein, in particular, this section (2) not spanned by the cantilever arm (6) is arranged between the free end (7) and the measuring element (8).

9. Measuring arrangement according to one of the claims according to one of claims 7 to 8, wherein the cantilever arm (6) consists of, in particular more than 30% by volume, in particular at least 40% by volume, in particular at least 50% by volume, in particular at least 60 vol.%, a composite material, in particular a fibre composite material, in particular a glass, aramid and/or carbon fibre composite material, and the composite material in particular contains fibres, wherein the fibres have a thermal expansion of at least -30*10⁻⁶K⁻¹ to a maximum of 60*10⁻⁶K⁻¹, in particular at least -10*10⁻⁶K⁻¹ to a maximum of 10*10⁻⁶K⁻¹, in particular at least -1*10⁻⁶K⁻¹ to a maximum of 0*10⁻⁶K⁻¹, in particular approximately -0.1*10⁻⁶K⁻¹, and in the transverse direction of the fibres a thermal expansion coefficient of at least -0*10⁻⁶K⁻¹ to a maximum of 60*10⁻⁶K⁻¹, in particular at least 0*10⁻⁶K⁻¹ to a maximum of 40*10⁻⁶K⁻¹, in particular at least 10*10⁻⁶K⁻¹ to a maximum of 30*10⁻⁶K⁻¹, in particular approximately 21*10⁻⁶ K⁻¹ .

10. Measuring arrangement according to the preceding claim, wherein the composite material contains fibres, wherein the cantilever arm (6) has a longitudinal extension in which the cantilever arm (6) extends more than in all other directions, and the fibres have a longitudinal fibre orientation in which the fibres extend more than in all other directions, wherein the fibres are arranged in the cantilever arm (6) such that the longitudinal fibre orientation of at least 30% by volume, in particular at least 50% by volume, in particular at least 75% by volume, of the fibres is at an angle between 35° and 55° to the longitudinal extension of the cantilever arm (6).

11. Measuring arrangement according to one of claims 7 to 10, wherein the bearing (9) is dimensioned and arranged such that the cantilever arm (6) supported in the bearing (9) can move freely at least 1 mm, in particular at least 1 cm, in at least two of the six, in particular all, directions.

12. Measuring arrangement according to one of claims 7 to 11, wherein the measuring arrangement has at least one temperature sensor, wherein in particular one of the at least one temperature sensor is arranged to detect temperatures at the cantilever arm (6), bearing (9), first and/or second fixing devices (4, 5), and/or one of the at least one temperature sensor is arranged to detect temperatures at the section (2), in particular at the supporting structure (1) or building.

13. Measuring arrangement according to one of claims 7 to 12, wherein the bearing (9) is a flange clamp connector with a clamping jaw that can be actuated, in particular by a screw, wherein, for the purpose of supporting the cantilever arm (6), the clamping jaws are not fully tightened, in particular up to a distance of at least 1 mm from the cantilever arm (6).

14. Measuring arrangement according to one of claims 7 to 13, wherein the measuring element (8) measures the distance (10) inductively, capacitively, optically or by means of eddy current technology, wherein in particular the free end (7) is designed for inductive, capacitive, optical or eddy current measurement technology.

15. Supporting structure (1) for a concrete structure, in particular a prestressed concrete structure, and/or steel structure with at least one measuring arrangement according to one of claims 7 to 14 arranged thereon, wherein the supporting structure (1) is in particular part of a structure consisting predominantly of concrete and/or steel, wherein the structure is in particular a bridge, in particular a land bridge or sea bridge, or a multi-storey car park.

## Revendications

1. Procédé pour déterminer une longueur (3), en particulier une variation de longueur, d'une section (2) d'une structure porteuse (1) s'étendant d'un premier à un deuxième dispositif de fixation (4, 5) fixé à une structure porteuse (1) d'un bâtiment, en particulier un bâtiment en béton ou en acier, en particulier un bâtiment fixe, dans lequel une distance (10), en particulier une variation de distance, entre une extrémité libre (7) d'un bras en porte-à-faux (6) disposé sur le premier dispositif de fixation (4) et s'étendant au moins partiellement au-dessus de la section (2) en direction du deuxième dispositif de fixation (5), en particulier un bras en porte-à-faux droit, et un élément de mesure (8) disposé sur le deuxième dispositif de fixation (5), en particulier de manière inductive, capacitive et/ou optique, dans lequel le bras en porte-à-faux (6) est supporté entre le premier dispositif de fixation (4) et son extrémité libre (7) au moyen d'au moins un palier (9), en particulier un palier à serrage et/ou à glissement, et dans lequel la longueur (3), en particulier la variation de longueur, est déterminée sur la base de la distance mesurée (10), en particulier de la variation de distance mesurée, entre l'extrémité libre (7) et l'élément de mesure (8).

2. Procédé selon la revendication 1, comprenant la fourniture du bras en porte-à-faux (6) sous la forme d'un bras en porte-à-faux (6) adapté à la dilatation thermique de la structure de support (1), en particulier au moins le long de la section (2), en particulier en adaptant sa dilatation longitudinale ou un coefficient de dilatation longitudinale d'un matériau du bras en porte-à-faux (6), l'adaptation étant réalisée par le fait que le bras en porte-à-faux (6) est formé à partir d'un matériau composite en fibre de verre et/ou en fibre de carbone et/ou présente une distribution d'orientation des fibres adaptée, la dilatation thermique des fibres de verre et/ou de carbone du matériau composite en fibre de verre et/ou en fibre de carbone dans leur direction longitudinale étant une dilatation thermique d'au moins - 30*10⁻⁶K⁻¹ à un maximum de + 60*10⁻⁶K⁻¹, en particulier d'au moins - 10*10⁻⁶K⁻¹ à un maximum de +10*10⁻⁶ K⁻¹, en particulier au moins -1*10⁻⁶ K⁻¹ à un maximum de 0*10⁻⁶K⁻¹, en particulier environ -0,1*10⁻⁶ K⁻¹, et dans la direction transversale des fibres, une dilatation thermique d'au moins -30*10⁻⁶K⁻¹ à un maximum de +60*10⁻⁶K⁻¹, en particulier au moins 0*10⁻⁶K⁻¹ à un maximum de +40*10⁻⁶ K⁻¹, en particulier au moins 10*10⁻⁶ K⁻¹ à un maximum de 30*10⁻⁶K⁻¹, en particulier environ 21*10⁻⁶K⁻¹, et dans lequel la distribution d'orientation des fibres de verre et/ou de carbone est choisie de telle sorte que la dilatation thermique longitudinale du bras en porte-à-faux (6) soit adaptée à la dilatation thermique de la structure de support (1) dans la région entre les premier et deuxième dispositifs de fixation (4, 5), en particulier la dilatation thermique longitudinale du bras en porte-à-faux (6) soit aussi proche que possible de la dilatation thermique de la structure de support (1) dans la plage de température concernée, en particulier entre -10 et +30 °C, et/ou en particulier au moins 30 % en poids des fibres de verre et/ou de carbone ont un alignement de leur extension longitudinale par rapport à l'extension longitudinale du bras en porte-à-faux (6) dans la plage de 35° à 55°.

3. Procédé selon l'une des revendications précédentes, dans lequel une température du bras en porte-à-faux (6), du premier et/ou du second dispositif de fixation (4, 5) et/ou du palier (9) ou à proximité de ceux-ci est détectée et/ou dans lequel une température de la structure porteuse (1), en particulier entre et/ou au niveau du premier et/ou du second dispositif de fixation (4, 5), ou à proximité de celle-ci, est détectée, dans lequel, en particulier, sur la base de la température détectée, en particulier des températures, et en particulier en connaissant le coefficient de dilatation thermique, en particulier le coefficient de dilatation thermique linéaire, le long et/ou transversalement à la direction d'extension de la section (2), le bras en porte-à-faux (6), le premier et/ou le second dispositif de fixation (4, 5), le palier (9) et/ou la structure porteuse (1) ou le bâtiment, et la distance mesurée (10), la longueur (3) est déterminée, en particulier la longueur déterminée est corrigée.

4. Procédé selon l'une des revendications précédentes, dans lequel plusieurs distances (10) sont mesurées au fil du temps et plusieurs longueurs (3) sont déterminées sur la base des distances mesurées (10), en particulier les variations des distances (10) sont mesurées au fil du temps et plusieurs variations de la longueur (3), en particulier sous forme de variation de la longueur (3) de la section (2), en particulier au fil du temps.

5. Procédé d'analyse d'une longueur (3) d'une section (2) d'une structure de support (1) s'étendant d'un premier à un second dispositif de fixation (4, 5), dans lequel plusieurs longueurs de section sont déterminées au fil du temps selon le procédé selon la revendication 4, dans lequel l'analyse comprend une comparaison des longueurs déterminées au fil du temps et, en particulier, un changement de longueur analysé pendant la comparaison est déterminé comme une déformation de la structure porteuse dans la section.

6. Procédé de surveillance d'une section (2) d'une structure porteuse (1) d'un bâtiment, en particulier d'un bâtiment en béton ou d'un bâtiment en acier, s'étendant d'un premier à un second dispositif de fixation (4, 5), dans lequel plusieurs longueurs (3) de la section (2) sont déterminées dans le temps selon le procédé selon la revendication 4 ou sur la base d'une analyse des longueurs (3) de la section (2) de la structure porteuse (1) sont déterminées selon le procédé selon la revendication 5, et la surveillance de la structure porteuse (1) ou du bâtiment est effectuée sur la base des longueurs (3) ou des déformations déterminées.

7. Dispositif de mesure pour déterminer une longueur (3), en particulier une variation de longueur (3), d'une section (2) d'une structure porteuse (1) d'une structure en béton, en particulier d'une structure en béton précontraint, ou d'une structure en acier, s'étendant d'un premier à un second dispositif de fixation (4, 5) du dispositif de mesure, dans lequel le dispositif de mesure comprend un élément de mesure (6) relié au premier dispositif de fixation (4) sur la structure porteuse (1), en particulier fixé, ayant une extrémité libre (7), en particulier droite, et le deuxième dispositif de fixation (5) a un élément de mesure (8), dans lequel le bras en porte-à-faux (6) s'étend depuis le premier dispositif de fixation (4) en enjambant au moins partiellement la section (2) en direction du second dispositif de fixation (5), en particulier vers son extrémité libre (7), et le dispositif de mesure est conçu pour mesurer une distance (10), en particulier une variation de la distance (10), entre l'extrémité libre (7) et l'élément de mesure (8), en particulier de manière inductive, capacitive et/ou optique, et pour déterminer la longueur (3) de la section (2) sur la base de la distance mesurée (10), **caractérisé en ce que** le dispositif de mesure comporte un palier (9) disposé entre l'extrémité libre (7) du bras en porte-à-faux (6) et le premier dispositif de fixation (4) (9), en particulier un palier à pince et/ou un palier lisse, qui est conçu pour supporter le bras en porte-à-faux (6) sur la structure de support (1) ou le bâtiment de telle manière qu'il puisse se déplacer librement, en particulier par rapport au palier (9) dans la direction longitudinale du bras en porte-à-faux (6).

8. Dispositif de mesure selon la revendication précédente, dans lequel la section (2) entre les premier et second dispositifs de fixation (4, 5) a une extension longitudinale d'au moins 0,1 m, en particulier d'au moins 0,2 m, en particulier d'au moins 1 m, et/ou d'un maximum de 50 m, en particulier d'un maximum de 25 m, en particulier un maximum de 10 m, en particulier un maximum de 5 m, et le bras en porte-à-faux (6) couvre au moins 50 %, en particulier au moins 80 %, de la longueur de la section (2), et en particulier au moins 1 ppb, en particulier au moins 1 ppm, en particulier au moins 0,01 %, et/ou moins de 20 %, en particulier un maximum de 10 %, en particulier un maximum de 1 %, en particulier un maximum de 0,1 %, de l'extension longitudinale de la section (2) n'est pas couverte par le bras en porte-à-faux (6), dans lequel, en particulier, cette section (2) non couverte par le bras en porte-à-faux (6) est disposée entre l'extrémité libre (7) et l'élément de mesure (8).

9. Dispositif de mesure selon l'une des revendications 7 à 8, dans lequel le bras en porte-à-faux (6) est constitué, en particulier à plus de 30 % en volume, en particulier à au moins 40 % en volume, en particulier à au moins 50 % en volume, en particulier à au moins 60 % en volume, d'un matériau composite, en particulier d'un matériau composite à fibres, en particulier d'un matériau composite à fibres de verre, d'aramide et/ou de carbone, et le matériau composite contient en particulier des fibres, les fibres ayant une dilatation thermique d'au moins -30*10⁻⁶K⁻¹ à un maximum de 60*10⁻⁶K⁻¹, en particulier d'au moins -10*10⁻⁶K⁻¹ à un maximum de 10*10⁻⁶K⁻¹, en particulier d'au moins -1*10⁻⁶K⁻¹ à un maximum de 0*10⁻⁶K⁻¹, en particulier environ -0,1*10⁻⁶K⁻¹, et dans la direction transversale des fibres, un coefficient de dilatation thermique d'au moins -0*10⁻⁶ K⁻¹ à un maximum de 60*10⁻⁶K⁻¹, en particulier au moins 0*10⁻⁶K⁻¹ à un maximum de 40*10⁻⁶ K⁻¹, en particulier au moins 10*10⁻⁶K⁻¹ à un maximum de 30*10⁻⁶K⁻¹, en particulier environ 21*10⁻⁶K⁻¹.

10. Dispositif de mesure selon la revendication précédente, dans lequel le matériau composite contient des fibres, dans lequel le bras en porte-à-faux (6) a une extension longitudinale dans laquelle le bras en porte-à-faux (6) s'étend plus que dans toutes les autres directions, et les fibres ont une orientation longitudinale dans laquelle les fibres s'étendent plus que dans toutes les autres directions, dans lequel les fibres sont disposées dans le bras en porte-à-faux (6) de telle sorte que l'orientation longitudinale des fibres d'au moins 30 % en volume, en particulier d'au moins 50 % en volume, en particulier d'au moins 75 % en volume, des fibres forme un angle compris entre 35° et 55° par rapport à l'extension longitudinale du bras en porte-à-faux (6).

11. Dispositif de mesure selon l'une des revendications 7 à 10, dans lequel le palier (9) est dimensionné et agencé de telle sorte que le bras en porte-à-faux (6) supporté dans le palier (9) puisse se déplacer librement d'au moins 1 mm, en particulier d'au moins 1 cm, dans au moins deux des six directions, en particulier dans toutes les directions.

12. Dispositif de mesure selon l'une des revendications 7 à 11, dans lequel le dispositif de mesure comporte au moins un capteur de température, dans lequel en particulier l'un des au moins un capteur de température est agencé pour détecter des températures au niveau du bras en porte-à-faux (6), du palier (9), des premier et/ou deuxième dispositifs de fixation (4, 5), et/ou l'un des au moins un capteur de température est agencé pour détecter des températures au niveau de la section (2), en particulier au niveau de la structure porteuse (1) ou du bâtiment.

13. Dispositif de mesure selon l'une des revendications 7 à 12, dans lequel le palier (9) est un raccord à bride avec une mâchoire de serrage qui peut être actionnée, en particulier par une vis, dans lequel, dans le but de supporter le bras en porte-à-faux (6), les mâchoires de serrage ne sont pas complètement serrées, en particulier jusqu'à une distance d'au moins 1 mm du bras en porte-à-faux (6).

14. Dispositif de mesure selon l'une des revendications 7 à 13, dans lequel l'élément de mesure (8) mesure la distance (10) de manière inductive, capacitive, optique ou au moyen de la technologie des courants de Foucault, dans lequel en particulier l'extrémité libre (7) est conçue pour la technologie de mesure inductive, capacitive, optique ou par courants de Foucault.

15. Structure porteuse (1) pour une structure en béton, en particulier une structure en béton précontraint, et/ou une structure en acier avec au moins un dispositif de mesure selon l'une des revendications 7 à 14 disposé sur celle-ci, dans lequel la structure porteuse (1) fait en particulier partie d'une structure composée principalement de béton et/ou d'acier, dans lequel la structure est en particulier un pont, en particulier un pont terrestre ou un pont maritime, ou un parking à plusieurs étages.
